(19) Europäisches Patentamt
European Patent Office
Office européen des brevets

(11) Publication number: **0 046 052**
**B1**

(12) **EUROPEAN PATENT SPECIFICATION**

(45) Date of publication of patent specification: **29.10.86**

(51) Int. Cl.$^4$: **C 08 L 67/02**

(21) Application number: **81303572.2**

(22) Date of filing: **05.08.81**

(54) **High gloss polyethylene terephthalate reinforced resin compositions.**

(30) Priority: **06.08.80 US 175565**

(43) Date of publication of application:
**17.02.82 Bulletin 82/07**

(45) Publication of the grant of the patent:
**29.10.86 Bulletin 86/44**

(84) Designated Contracting States:
**BE DE FR GB IT NL**

(56) References cited:
**EP-A-0 028 701**
**FR-A-2 307 014**
**GB-A-1 511 279**
**US-A-4 011 193**
**US-A-4 074 006**

(73) Proprietor: **CELANESE CORPORATION**
**1211 Avenue of the Americas**
**New York New York 10036 (US)**

(72) Inventor: **Christiansen, John**
**240 East 9th Street**
**Plainfield New Jersey (US)**
Inventor: **Lu, Shau-zou**
**3 Hickory Lane, R.D. 2**
**Whitehouse Station New Jersey (US)**

(74) Representative: **De Minvielle-Devaux, Ian Benedict Peter et al**
**CARPMAELS & RANSFORD**
**43, Bloomsbury Square**
**London WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 046 052 B1

**Description**

This invention relates to polyethylene terephthalate resin compositions containing reinforcing agents (or fillers) which are useful in moulding applications to produce smooth, glossly mouldings.

It is often desirable to enhance the strength of articles moulded from polyethylene terephthalate resin by employing a reinforcing material, such as glass fibres, asbestos fibres or other fibrous mineral materials, preferably with a coupling agent, in the resin. It is sometimes sufficient merely to increase the modulus by use of a filler, such as beads or a mineral of low aspect ratio, in the resin. However, heretofore it was necessary to use very high mould temperatures, on the order of 130°C., to obtain moulded articles from such reinforced or filled resins which had a glossy surface and which were not rough in texture. If these high mould temperatures were not employed, the moulded articles had a rough surface with poor gloss. It is believed that the crystallisation rate of polyethylene terephthalate is too slow, below about 130°C., to result in a moulded article having good surface characteristics.

While good surface characteristics can be obtained at moulding temperatures of 130°C. or more, the use of such temperatures is not practical in the moulding field, for most moulds are heated with water and attain temperatures of only about 85—110°C.

A few moulding devices employ heating means such as oil to reach temperatures higher than 85—110°C. but these generally are inconvenient to use and still either do not generally reach such temperatures or reach them unevenly because of inadequate coring. Because of these heating problems, it is proven commercially unattractive to employ these high temperature moulding devices with reinforced or filled polyethylene terephthalate resins.

To increase the speed of crystallisation of the invention moulded polyethylene terephthalate in the mould, it has been proposed at various time to add to the resin finely divided inorganic substances as nucleating agents. By this step the crystallinity and the density of the injection moulded articles are increased and therewith the dimensional stability and stability of shape at elevated temperatures are improved. As solid inorganic substances there have been proposed, for example, metal oxides, alkaline earth metal salts, talc powder, glass powder or metals. It has likewise been proposed to increase the speed of crystallisation by adding to the resin a mixture of inorganic nucleating agents with specific epoxides. In all of these cases it is said to be desirable that the inorganic substances should have a particle size of less than two microns if possible.

In all of the above situations, even when filled polyethylene resin has been moulded at temperatures above 110°C., it has been found that it is necessary to obtain the unobjectionable injection moulded articles, that the polyester moulding composition should contain as little moisture as possible; the art suggests preferably less than 0.02% by weight water.

In addition to the above-described problems, it has been found that many of the nucleating agents taught as useful in the prior art have a negative effect on the normally high heat deflection temperature of moulded polyethylene terephthalate.

By means of the present invention, a reinforced and/or filled polyethylene terephthalate resin composition is obtainable that can be moulded at mould temperatures below about 110°C. without a predrying stage prior to compounding to produce a moulded article having a smooth and glossy surface and, at the same time, sustaining high heat deflection temperature levels. The reinforced and/or filled polyethylene terephthalate resins of this invention achieve the foregoing properties by having incorporated therein alkali metal salts having anions which are oxides of the elements from Group IVA of the Periodic Table, preferably the alkali metal carbonates and bicarbonates.

According to this invention there are provided thermoplastic compositions comprising in combination:

a. from 40 to 95% by weight of a polyethylene terephthalate resin;

b. at least 4% by weight of a substance which is a reinforcing agent or filler material or a blend of reinforcing agent and filler material; and

c. from 0.1 to 25% by weight of an alkali metal salt whose anion is an oxide or oxides of an element of Group IVA of the Periodic Table.

The percentages are by weight of the total compositions.

A preferred feature of this invention is to provide such thermoplastic compositions comprising glass fibres as reinforcing agent or filler material.

It is also in many cases desirable that the composition should contain from 0.5 to 20% by weight of a plasticiser.

According to another preferred feature of this invention, the compositions is a flame-retardant thermoplastic composition; for this purpose it comprises a flame-retardant additive in a minor proportion but in amount at least sufficient to render the resinous combination non-burning or self-extinguishing.

The compositions generally consist essentially of only those ingredients which are mentioned above. That is to say, either no other ingredient than those mentioned above is present, or, if any other ingredient is present, it is of such a nature and in such an amount as not to have a substantial adverse effect on the properties of the composition or of mouldings made therefrom.

Polyethylene terephthalate resins are disclosed in U.S. Patent No. 2,465,319 of Whinfield et al. Such polymeric linear terephthalic esters are composed of recurring structural units of the formula

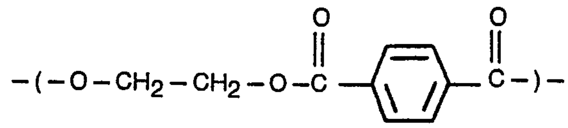

Such polymers will have molecular weights high enough to have melting points about 200°C. Polyethylene terephthalate resins can be made following the teachings of U.S. Patent 2,465,319 and U.S. Patent 3,047,539 of Pengilly.

Other suitable polyesters are, for example, polycyclohexane-1,4-dimethylol terephthalate or polyesters containing as acid component, in addition to terephthalic acid, up to 5 mole percent of other aromatic or aliphatic dicarboxylic acids, such as isophthalic acid, naphthalene-2,6-dicarboxylic acid or adipic acid, or as alcoholic component, in addition to ethylene glycol, up to 30 mole percent of other aliphatic diols, such as 2,2-dimethylpropane-diol-1,3 or butane-diol-(1,4), or up to 1% of tetrols, for example 1,1,4,4-tetramethylol-cyclohexane. These can also be made following the teachings of the above-mentioned Pengilly and Whinfield Patents suitably modified if necessary. Polyesters of hydroxy carboxylic acids may also be used.

The polyesters should have an intrinsic viscosity of at least 0.2 and preferably at least 0.4 decilitre/gram as measured from the relative viscosity of an 8% solution in orthochlorophenol at 25°C.—30°C. The upper limit is not critical but it will generally be about 2.5 decilitre/gram. Especially preferred polyesters will have an intrinsic viscosity in the range of 0.4 to 1.3 decilitre/gram.

As has been mentioned, the preferred class of compositions will comprise the polyethylene terephthalate resin and a reinforcing amount of a reinforcing filler.

The polyethylene terephthalate resin can be present in an amount from 40 to 95% by weight, preferably from 45 to 90% by weight and most preferably from 50 to 85% by weight.

In general, any reinforcement can be used, for example, fibres, whiskers or platelets of metals, i.e., aluminum, iron or nickel and the like, and non-metals, i.e., ceramics, carbon filament silicates, asbestos, titanium dioxide and titanate whiskers, quartz, glass flakes and fibres and the like.

In particular, the preferred reinforcing filler is glass and it is preferred to use fibrous glass filaments comprised of lime-aluminum borosilicate glass that is relatively soda free. This is known as "E" glass. However, other glasses are useful where electrical properties are not so important, for example, the low soda glass known as "C" glass. The filaments are made by standard processes, e.g., by steam or air blowing, flame blowing and mechanical pulling. The preferred filaments for plastics reinforcement are made by mechanical pulling. The filament diameters generally range from 0.00012 to 0.00075 inch (0.0030 to 0.0190 mm) but this is not critical to the present invention.

The length of the glass filaments, and whether or not they are bundled into fibres and the fibres bundled in turn to yarns, ropes or rovings or woven into matts and the like, are not critical to the invention. However, in preparing the present compositions, it is convenient to use the filamentous glass in the form of chopped strands of from 1/8 inch to 1 inch long (3.2 to 2.5 mm), preferably less than 1/4 inch (6.4 mm) long. In articles moulded from the compositions, on the other hand, even shorter lengths will be encountered because during compounding considerable fragmentation will occur. This is desirable, however, because the best properties are exhibited by thermoplastic injection moulded articles in which the filament lengths generally lie between 0.000005 inch and 0.125 (1/8) inch (0.000125 and 3.2 mm). In general, the best properties will be obtained if the sized filamentous glass reinforcement forms at least 4% by weight, based on the combined weight of the glass, polyester and additives, and preferably from 10 to 55% by weight. Most preferably, the glass will form from 24 to 45% by weight, based on the combined weight of the glass, polyester and additives. Generally, for direct moulding, use of up to 65% of glass is possible without causing flow problems.

The nucleating agents of the present invention are alkali metal salts with inorganic anions which are oxides of elements of Group IVA of the Periodic Table of the Elements (Dyna-Slide Company, 1962). In other words, the metal cations of the inorganic nucleating salts of the instant invention are lithium, sodium, potassium, rubidium or caesium; the preferred metal cations are lethium, sodium and potassium, and the most preferred is sodium.

The anions of the inorganic nucleating agents of the present invention are the oxides of carbon; silicon, germanium; tin and lead. The preferred oxides are those of carbon and silicon, the most preferred being the carbon oxides, for example the carbonate and bicarbonate anions.

The amount of the nucleating agents in the resin compositions is from 0.1 to 25% by weight, based on the total weight, preferably from 0.2 to 10% by weight and most preferably from 0.3 to 3% by weight.

Although the addition of plasticisers to the compositions of the present invention have very little effect on heat distortion temperatures of the moulded articles, they have been found to enhance the gloss values of the already smooth surfaces achieved with the nucleating agents of the present invention. Furthermore, the use of plasticisers permits the nucleating agents of this invention to be effective at lower percentages. The plasticisers should be present in an amount from 0.05 to 20% by weight, based on the total weight of the composition. The plasticisers include, for example, organic esters selected from the product of an aromatic carboxylic acid of 7—11 carbon atoms containing at least one carboxyl group per aromatic nucleus and an alcohol having the formula $(HOCH_2)_xR'$ wherein x is 1, 2 or 3 and R' is a hydrocarbon radial

of 2—15 carbon atoms (preferably 2—10 carbon atoms) or having the formula HO—(—R''O—)$_y$—R''' wherein y is a cardinal number from 1 to 15, preferably from 2 to 8, R'' is a hydrocarbon radial of 2—15 carbon atoms (preferably 2—8 carbon atoms) and R''' is —H or a hydrocarbon radical of 2 to 20 carbon atoms (preferably 2—12 carbon atoms); or a polyglycol.

The preferred organic esters are those in which the aromatic carboxylic acids are hydrocarbon acids containing 1—3 carboxyl groups and the alcohols are aliphatic. In other words, the R groups in the alcohols are alkyl or alkylene depending upon the particular R group. Preferably also, when the carboxylic acids contain 2 or more carboxyl groups, the carboxyl groups are all reacted to form ester linkages, that is, there will be no free carboxyl groups present in the ester. Preferably, all the hydroxyl groups of the alcohols will also be reacted to form ester linkages, that is, there will be no free hydroxyl groups present in the ester.

A preferred class of esters are those in which the acid is benzoic acid, and the alcohol is of the formula $(HOCH_2)_2R'$ wherein R' is alkylene of 4—6 carbon atoms, preferably neopentylglycol, or of the formula HO(R''O—)y-H wherein R'' is ethylene or propylene, and y is 2 or 3.

Specific compounds within these definitions include dibenzoate of neopentylglycol, dibenzoate of triethylene glycol, dibenzoate of di-ethylene glycol, dibenzoate of dipropylene glycol, tris-2-ethyl hexyl trimellitate, phenol benzoate, trimethylol ethane tribenzoate, dioctylphthalate and diisodecylphthalate.

Other suitable plasticisers include benzophenone, 4-fluoro-benzophenone, diphenylsulphone, N-ethyl-o,p-toluene sulfonamide, tolyl sulfoxide, lauryl nitrile and erucyl-nitrile.

It is a preferred feature of this invention also to provide flame-retardant compositions because polyethylene terephthalate is normally flammable. Therefore, the composition can also include a flame-retardant additive in a minor proportion but in an amount at least sufficient to render the polyester resin non-burning or self-extinguishing.

Non-dripping embodiments are provided if the flame-retardant compositions also include a polytetrafluoroethylene resin or a fumed colloidal silica in a minor proportion based on the composition but in an amount at least sufficient to render said polyester resin non-dripping, when burning.

Definitions of the terms "non-burning", "self-extinguishing" and "non-dripping" as well as descriptions of the standard tests utilised to measure these properties and flame-retardant additives are well known in the art and discussed in detail in U.S. Patent No. 3,953,394 of Fox et al.

It is also contemplated that the compositions of the present invention can contain mould release agents such as Acrawax C (N,N'-distearoyl ethylenediamine) in an amount from 0.05 to 10% by weight, based on the total weight of the composition. (Acrawax is a Trade Mark).

The filler material and other additives, such as foaming agents, can be added in any usual manner such as, for example, by dry mixing in the melted state in an extruder, on a heated mill or in other mixers.

By way of illustration, glass roving (a bundle of strands or filaments) is chopped into small pieces, for example 1/8 inch to 1 inch (3.2 to 2.5 mm) in length and preferably less than 1/4 inch (6.4 mm) in length and is put into an extrusion compounder with the polyester resin, the nucleating agent, the flame retardant additive(s), if used, and also, if used, the polytetrafluoroethylene or fumed colloidal silica, to produce moulding pellets. The fibres are shortened and predispersed in the process, ending up less than 1/16 inch (1.6 mm) long. In another procedure, glass filaments are ground or milled to short lengths and are mixed with the resin nucleating agent, flame-retardant additive and polytetrafluoroethylene resin or fumed colloidal silica by dry blending, then either fluxed in a mill or ground. Alternatively, the glass filaments are extruded and chopped. In still another procedure, continuous lengths of glass roving are drawn through a bath of melted polyester resins, and nucleating agents and optionally the flame-retardant additive(s) and polytetrafluoroethylene resin or fumed colloidal silica which procedure coats the filaments. The resin-coated glass strand is then comminuted into pellets to form a moulding compound. The glass fibres can also be mixed with resin, nucleating agent and additives and indirectly moulded, for example, by injection or transfer moulding techniques.

Compounding should be carried out so as to ensure that the residence time in the machine is short, the temperature is carefully controlled and an intimate blend between the resin and additives is obtained.

Although it is not essential, best results are obtained if the ingredients are pre-compounded, pelletised and then moulded. Pre-compounding can be carried out in conventional equipment. For example, a single screw extruder is fed a dry blend of the ingredients, the screw employed having a long transition section to ensure proper melting. On the other hand, a twin screw extrusion machine, for example, a 28 millimetre Werner & Pfleideren machine can be fed and additives at the feedport and reinforcement filaments downstream. In either case, a generally suitable machine temperature will be about 500° to 580°F (260° to 305°C.).

The pre-compounded composition can be extruded and cut up into moulding compounds, such as conventional granules, pellets, etc. by standard techniques. The compositions can be moulded in any equipment conventionally used for reinforced thermoplastic compositions. For example, good results will be obtained in an injection moulding machine, e.g., of the Newbury type with conventional cylinder temperatures (e.g., 510°F. or 265°C) and mould temperatures (e.g., from 150°F to 230°F or from 65°C. to 110°C.) at cycle times from 20 seconds to 60 seconds. If necessary, depending on the moulding properties of the polymer, the amount of reinforcing filler and the rate of crystallisation of the polyester are determined by the type and amount of nucleating agent utilised. Those skilled in the art will be able to make the conventional adjustments and design moulding cycles to accommodate the composition.

The following examples illustrate the invention. They are set forth as a further description, but are not to be construed as limiting the invention.

The gloss test used in the following examples is an adaptation of ASTM D-2457 with any results below 15 being undesirable. This test which has a description for use on plastic film is conducted at a 45° angle substituting a moulded plaque in lieu of the film sample.

Examples 1—4

The following blends of polyethylene terephthalate (PET), glass and the nucleating agents, calcium carbonate, talc, sodium bicarbonate and sodium carbonate are individually pre-compounded at 510°F (265°C) (barrel temperature) by passing them through a 2,5 inch (63.5 mm) Johnson single screw extruder. This PET has a water content of from 0.58 to 0.68%. Half of the material is carefully pre-dried at 300°F (150°C) for approximately 12 hours prior to being fed to the extruder. The moisture content of the pre-dried material is approximately 0.01% by weight. The calcium carbonate has an average particle size of about 0.07 microns and the talc has an average particle size of about 2.7 microns.

The extrudate from the extruder is pelletised and the pellets are injection moulded at 110°, 90° and 70°C. (see Table 1) ino ASTM type test bars in a 5 oz. (142 g) Reed injection moulding machine.

The heat deflection temperature data is according to ASTM D-648 at 264 psi (1820 kPa).

TABLE 1

| Composition | 1) | 2) | 3) | 4) |
|---|---|---|---|---|
| PET | 68.3% | 68.3% | 68.3% | 68.3% |
| Glass | 31% | 31% | 31% | 31% |
| Nucleant | 0.7% | 0.7% | 0.7% | 0.7% |
| | $CaCO_3$ | Talc | $NaHCO_3$ | $Na_2CO_3$ |
| Resin Moisture Content — Heat Deflection Temperature Values at 264 psi (1820 kPa) | | | | |
| 1) PET = app. 0.01% (dry) | | | | |
| Mould Temperature | | | | |
| 110°C. | 98 | 222 | 231 | 224 |
| 90°C | 83 | 217 | 230 | 225 |
| 70°C. | 78 | 196 | 223 | 224 |
| 2) PET = 0.58 to 0.68% (wet) | | | | |
| Mould Temperature | | | | |
| 110°C. | 214 | 214 | 230 | — |
| 90°C. | 84 | 203 | 227 | — |
| 70°C. | 78 | 105 | 222 | — |

1) and 2 are Comparative Examples.

TABLE 2

| Composition | | | | |
|---|---|---|---|---|
| PET | 68.3% | 68.3% | 68.3% | 68.3% |
| Glass | 31% | 31% | 31% | 31% |
| Nucleant | 0.7% | 0.7% | 0.7% | 0.7% |
| | $CaCO_3$ | Talc | $NaHCO_3$ | $Na_2CO_3$ |
| **Resin Moisture Content — Gloss Values** | | | | |
| 1) PET = app. 0.01% (dry) | | | | |
| Mould Temperature | | | | |
| 110°C. | <15 | <15 | 32 | 51 |
| 90°C. | <15 | <15 | 18 | 30 |
| 70°C. | <15 | <15 | <15 | 23 |
| 2) PET = 0.58 to 0.68% (wet) | | | | |
| Mould Temperature | | | | |
| 110°C. | <15 | <15 | 46 | — |
| 90°C. | <15 | <15 | <15 | — |
| 70°C. | <15 | <15 | 17 | — |

In the above examples it is seen that moulding compositions utilising standard nucleating agents of the prior art, such as calcium carbonate and talc, have unacceptably low heat deflection temperatures when the mould temperatures for both wet and dry resin are below 110°C. The nucleating agents of the present invention, as typefied by our preferred nucleating agents of sodium bicarbonate and sodium carbonate, on the other hand, even with wet, i.e., non-dried, pre-compounded resin, polyethylene terephthalate resin can be moulded below 110°C. even as low as 70°C. and still sustain high heat deflection temperatures, i.e., above 220°C.

Furthermore, examination of the gloss values show them to be totally unacceptable when standard agents such as calcium carbonate and talc are employed. This is the case even at a mould temperature of 110°C. and even when the polyethylene terephthalate resin has been pre-dried to below 0.01% moisture. In startling contrast the results with sodium bicarbonate and sodium carbonate show that high gloss is attained at 110°C. and below and in the case of the sodium bicarbonate high gloss value is obtainable at about 110°C. even though the resin has not been pre-dried prior to compounding.

### Examples 5—15

All of the following examples are prepared in accordance with the procedures followed in Examples 1—4 and all of the formulations contain about 65.6% polyethylene terephthalate, 31% glass, 0.2% Acrawax C and 3% of a neopentylglycol dibenzoate plasticiser, with the exception of Example 12 which contains no plasticiser.

| EXAMPLE NOS. | NUCLEANTS | GLOSS VALUES |
|---|---|---|
| 5 | 0.2% $Na_2CO_3$ | 42 |
| 6 | 0.2% $K_2CO_3$ | 35 |
| 7 | 0.2% $Li_2CO_3$ | 23 |
| 8x) | 0.2% $(NH_4)_2$ $HPO_4$ | 17 |
| 9x) | 0.2% $Na_2HPO_4.12H_2O$ | 17 |
| 10x) | 0.2% $MgSO_4.7H_2O$ | 12 |
| 11x) | 0.2% NaCl | 12 |
| 12 | 0.2% $Na_2CO_3$ | 16 |
| 13 | 0.4% $NaHCO_3$ | 56 |
| 14 | 0.4% $Na_2SiO_3$ | 47 |
| 15 | 0.4% $Na_2SO_4$ | 16 |

x) Comparative Examples

These compositions were all moulded with a mould temperature of 100°C. and the compositions dried prior to extruding.

From the above examples one can see that the gloss values of moulded articles employing nucleating agents other than those of this invention (Examples 8—11 and 15) even with the use of a plasticiser, range from marginally acceptable to totally unacceptable. This is in sharp constrast to the extremely high gloss values realised when the nucleating agents of the present invention are combined with a plasticiser as shown in Examples 5, 6, 7, 13 and 14.

Furthermore, a comparision of the gloss value result of Example 5 which utilises a 0.2% loading of $Na_2CO_3$ with neopentylglycol dibenzoate plasticiser present versus the gloss value result of Example 12 which utilises a 0.2% loading of $Na_2CO_3$ without a plasticiser, illustrates the enhancement of the effectiveness of the nucleating agent realised by the plasticiser addition.

Obviously, other modifications and variations of the present invention are possible in the light of the above teachings. It is therefore to be understood that changes may be made in the particular embodiments of this invention described which are within the full intended scope of the invention as defined by the appended claims.

**Claims**

1. A thermoplastic composition comprising

a. from 40 to 95% by weight, based on the total weight of the composition, of polyethylene terephthalate having an inherent viscosity of at least 0.2;

b. at least 4% by weight, based on the total weight of the composition, of a reinforcing agent or filler material or a blend of reinforcing agent and filler material;

c. from 0.1 to 25% by weight, based on the total weight of the composition, of an alklai metal salt having an anion which is an oxide of an element from Group IVA of the Periodic Table.

2. The composition of claim 1 wherein the reinforcing agent or filler material is glass fibres.

3. The composition of claim 1 or 2 wherein the alklai metal salt cation is lithium, sodium or potassium.

4. The composition of claim 3 wherein the alkali metal salt cation is sodium.

5. The composition of any of claims 1—4 wherein the anion of the alkali metal salt is an oxide of carbon or silicon.

6. The composition of claim 5 wherein the anion of the alklai metal is carbonate or bicarbonate.

7. The composition of claims 1—6 which comprises additionally from 0.5 to 20% by weight, based on the total weight of the composition, of a plasticiser.

8. The composition of claim 7 wherein the plasticiser is selected from

a. esters of an aromatic carboxylic acid of 7—11 carbon atoms containing at least one carboxyl group per aromatic nucleus with an alcohol selected from those of the formula $(HOCH_2—)_x—R'$ wherein x is 1, 2 or 3 and R' is a hydrocarbon radical of 2—15 carbon atoms or those of the formula $HO—(R''O—)_y—R'''$ where y is a cardinal number between 1 and 15, R'' is a hydrocarbon radical of 2—15 carbon atoms and R''' is —H or a hydrocarbon radial of 2—20 carbon atoms, and

b. polyglycol.

9. The composition of claim 7 wherein the plasticiser is neopentyl glycol dibenzoate, benzophenone or polyglycol.

10. The composition of claim 9, wherein the neopentylglycol dibenzoate is present in an amount of about 3 percent by weight of the composition.

11. The composition of any of claims 1—10 which comprises additionally a flame-retardant additive in a minor proportion but in an amount at least sufficient to render the composition non-burning or self-extinguishing.

12. The composition of any of claims 1—11 which comprises a polytetrafluoroethylene resin or a fumed colloidal silica in a minor proportion but in an amount at least sufficient to render the composition non-dripping when burning.

13. A method of producing moulded, reinforced polyethylene terephthalate articles which comprises:

(1) employing a polyethylene terephthalate resin composition consisting essentially of:

(a) from 40 to 95% by weight of polyethylene terephthalate having an inherent viscosity of at least 0.4;

(b) at least 4% by weight of a reinforcing agent; a filler material; or a blend of a reinforcing agent and filler material; and

(c) from 0.1 to 25% by weight of an alkali metal salt having an anion which is an oxide of an element from Group IVA of the Periodic Table; and

(2) moulding said resin composition at a temperature from 70° to 100°C. sufficient to produce a moulded polyethylene terephthalate article having a heat distortion temperature of at least 220°C. and a gloss value of at least 16.

14. The method of claim 13 wherein the resin composition is dried prior to being compounded and prior to being employed in the method.

15. The method of claim 13 or 14 wherein the reinforcing material is glass fibre.

16. The method of claims 13—15 wherein the alkali metal salt cation is lithium, sodium or potassium.

17. The method of claim 16 wherein the alkali metal is salt cation is sodium.

18. The method of any of claims 13—17 wherein the anion of the alkali metal salt is an oxide of carbon or silicon.

19. The method of claim 18 wherein the anions of the alkali metal salts are carbonate or bicarbonate.

20. The method of claims 17 and 19 wherein the alkali metal salt is sodium bicarbonate or sodium carbonate.

21. The method of any of claims 13—20 wherein the composition contains additionally from 0.5 to 20 weight percent of a plasticiser.

22. The method of claim 21 wherein the plasticiser is selected from

(a) esters of an aromatic carboxylic acid of 7—11 carbon atoms containing at least one carboxyl group per aromatic nucleus with an alcohol selected from those of the formula $(HOCH_2—)_x—R'$ wherein x is 1, 2 or 3 and R' is a hydrocarbon radical of 2—15 carbon atoms or those of the formula $HO—(R''O—)_y—R'''$ wherein y is a cardinal number between 1 and 15, R'' is a hydrocarbon radical of 2—15 carbon atoms and R''' is —H or a hydrocarbon radical of 2—20 carbon atoms, and

(b). polyglycol.

23. The method of claim 21 wherein the plasticiser is neopentylglycol dibenzoate, benzophenone or a polyglycol.

24. The method of any of claims 13—23 comprising in addition a flame-retardant additive in a minor proportion but in an amount at least sufficient to render the composition non-burning or self-extinguishing.

25. The method of claim 24 whereby said resinous combination is non-dripping when burning.

**Patentansprüche**

1. Thermoplastische Zusammensetzung, enthaltend

a) 40 bis 95 Gew.-%, bezogen auf das Gesamtgewicht der Zusammensetzung, Polyethylenterephthalat mit einer logarithmischen Viskositätszahl von wenigstens 0,2,

b) wenigstens 4 Gew.-%, bezogen auf das Gesamtgewicht der Zusammensetzung, eines Verstärkungsmittels oder Füllstoffs oder eines Gemisches aus Verstärkungsmittel und Füllstoff,

c) 0,1 bis 25 Gew.-%, bezogen auf das Gesamtgewicht der Zusammensetzung, eines Alkalisalzes mit einem Anion, das ein Oxid eines Elements der Gruppe IVA des Periodensystems ist.

2. Zusammensetzung nach Anspruch 1, worin das Verstärkungsmittel oder der Füllstoff aus Glasfasern besteht.

3. Zusammensetzung nach Anspruch 1 oder 2, worin das Alkalisalzkation Lithium, Natrium oder Kalium ist.

4. Zusammensetzung nach Anspruch 3, worin das Alkalisalzkation Natrium ist.

5. Zusammensetzung nach irgendeinem der Ansprüche 1 bis 4, worin das Anion des Alkalisalzes ein Oxid des Kohlenstoffs oder Siliciums ist.

6. Zusammensetzung nach Anspruch 5, worin das Anion des Alkalisalzes das Carbonat oder Bicarbonat ist.

7. Zusammensetzung nach irgendeinem der Ansprüche 1 bis 6, enthaltend zusätzlich 0,5 bis 20 Gew.-% bezogen auf das Gesamtgewicht der Zusammensetzung, eines Weichmachers.

8. Zusammensetzung nach Anspruch 7, worin der Weichmacher ausgewählt ist aus

a) Estern einer wenigstens eine Carboxylgruppe pro aromatischen Kern enthaltenden aromatischen Carbonsäure mit 7 bis 11 C-Atomen mit einem Alkohol, der ausgewählt ist aus solchen der Formel $(HOCH_2—)_x—R'$, worin x für 1, 2 oder 3 steht und R' ein Kohlenwasserstoffrest mit 2 bis 15 C-Atomen ist, oder solchen der Formel $HO—(R''O—)_y—R'''$, worin y eine Grundzahl zwischen 1 und 15, R'' ein Kohlenwasserstoffrest mit 2 bis 15 C-Atomen und R''' —H oder eine Kohlenwasserstoffrest mit 2 bis 20 C-Atomen ist, und

b) Polyglycol.

9. Zusammensetzung nach Anspruch 7, worin der Weichmacher, Neopentylglycoldibenzoat, Benzophenon oder Polyglycol ist.

10. Zusammensetzung nach Anspruch 9, worin das Neopentylglycoldibenzoat in einer Menge von etwa 3 Gew.-% der Zusammensetzung vorhanden ist.

11. Zusammensetzung nach irgendeinem der Ansprüche 1 bis 10, enthaltend zusätzlich einen feuerhemmenden Zusatzstoff in einem geringfügigen Anteil, jedoch in einer Menge, die wenigstens genügt, um die Zusammensetzung nicht-brennend oder selbsterlöschend zu machen.

12. Zusammensetzung nach irgendeinem der Ansprüche 1 bis 11, enthaltend ein Polytetrafluoroethylenharz oder ein sehr feines, helles, durchscheinendes, kolloidales Siliciumdioxidpulver (fumed silica) in einem geringfügigen Anteil, aber in einer Menge, die wenigstens genügt, um die Zusammensetzung beim Brand nicht-tropfend zu machen.

13. Verfahren zur Herstellung von verstärkten Polyethylenterephthalat-Preß- und -Formteilen, umfassend

1) die Verwendung einer Polyethylenterephthalat-harz-Zusammensetzung, bestehend im wesentlichen aus

a) 40 bis 95 Gew.-% Polyethylenterephthalat mit einer logarithmischen Viskositätszahl von wenigstens 0,4,

b) wenigstens 4 Gew.-% eines Verstärkungsmittels, eines Füllstoffs oder eines Gemisches eines Verstärkungsmittels und eines Füllstoffs und

c) 0,1 bis 25 Gew.-% eines Alkalisalzes, das ein Anion hat, das ein Oxide eines Elements aus der Gruppe IVA des Periodensystems ist, und

(2) Verpressen der genannten Harzzusammensetzung bei einer Temperature von 70° bis 100°C, die genügt, um ein verpreßtes Polyethylenterephthalat-Formteil mit einer Formbeständigkeit in der Wärme von wenigstens 220°C und einem Glanzwert von wenigstens 16 zu bilden.

14. Verfahren nach Anspruch 13, worin die Harzzusammensetzung vor der Mischungsherstellung und vor der Verwendung beim Verfahren getrocknet wird.

15. Verfahren nach Anspruch 13 oder 14, worin die Verstärkungsmaterialien Glasfasern sind.

16. Verfahren nach Anspruch 13—15, worin das Kation des Alkalisalzes Lithium, Natrium oder Kalium ist.

17. Verfahren nach Anspruch 16, worin das kation des Alkalimetallsalzes Natrium ist.

18. Verfahren nach irgendeinem der Ansprüche 13 bis 17, worin das Anion des Alkalimetallsalzes ein Oxid des Kohlenstoffs oder Siliciums ist.

19. Verfahren nach Anspruch 18, worin die Anionen der Alkalimetallsalze das Carbonat oder Bicarbonat sind.

20. Verfahren nach Ansprüchen 17 und 19, worin das Alkalimetallsalz das Natriumbicarbonat oder Natriumcarbonat ist.

21. Verfahren nach irgendeinem der Ansprüche 13 bis 20, worin die Zusammensetzung zusätzlich 0,5 bis 20 Gew.-% eines Weichmachers enthält.

22. Verfahren nach Anspruch 21, worin der Weichmacher ausgewählt ist aus

a) Estern einer wenigstens eine Carboxylgruppe pro aromatischen Kern enthaltenden aromatischen Carbonsäure mit 7 bis 11 C-Atomen mit einem Alkohol, der ausgewählt ist aus solchen der Formel $(HOCH_2—)_x—R'$, worin x für 1, 2 oder 3 steht und R' ein Kohlenwasserstoffrest mit 2 bis 15 C-Atomen ist, oder solchen der Formel $HO—(R''O—)_yR'''$, worin y eine Grundzahl zwischen 1 und 15, R'' ein Kohlenwasserstoffrest mit 2 bis 15 C-Atomen und R''' —H oder ein Kohlenwasserstoffrest mit 2 bis 20 C-Atomen ist, und

b) einem Polyglycol.

23. Verfahren nach Anspruch 21, worin der Weichmacher Neopentylglycoldibenzoat, Benzophenon oder ein Polyglycol ist.

24. Verfahren nach irgendeinem der Ansprüche 13 bis 23, umfassend zusätzlich einen feuerhemmenden Zusatzstoff in einem geringfügigen Anteil, jedoch in einer Menge, die wenigstens genügt, um die Zusammensetzung nicht-brennend oder selbsterlöschend zu machen.

25. Verfahren nach Anspruch 24, wodurch die Harzkombination nicht-tropfend ist, wenn sie brennt.

**Revendications**

1. Composition thermoplastique comprenant

a. de 40 à 95% en poids, en se basant sur le poids total de la composition, de téréphtalate de polyéthylène ayant une viscosité inhérente d'au moins 0,2;

b. au moins 4% en poids, en se basant sur le poids total de la composition, d'un agent de renforcement ou d'un matériau de charge ou d'un mélange d'un agent de renforcement et d'un matériau de charge;

c. de 0,1 à 25% en poids, en se basant sur le poids total de la composition, d'un sel d'un métal alcalin ayant un anion qui est un oxyde d'un élément du Groupe IVA de la Table Périodique.

2. Composition de la revendication 1 où l'agent de renforcement ou le matériau de charge est des fibres de verre.

3. Composition de la revendication 1 ou 2 où le cation d'un sel de métal alcalin est le lithium, le sodium ou le potassium.

4. Composition de la revendication 3 où le cation d'un sel de métal alcalin est le sodium.

5. Composition selon l'une des revendications 1—4 où l'anion du sel d'un métal alcalin est un oxyde de carbone ou de silicium.

6. Composition de la revendication 5 où l'anion du sel d'un métal alcalin est le carbonate ou le bicarbonate.

7. Composition selon l'une quelconque des revendications 1—6 qui comprend de plus de 0,5 à 20% en poids, en se basant sur le poids total de la composition, d'un agent plastifiant.

8. Composition de la revendication 7 où l'agent plastifiant est choisi parmi

a. des esters d'un acide carboxylique aromatique de 7—11 atomes de carbone contenant au moins un groupe carboxyle par noyau aromatique avec un alcool choisi parmi ceux de formule $(HOCH_2—)_x—R'$ où x est 1, 2, 3 et R' est un radical hydrocarbure de 2—15 atomes de carbone ou ceux de formule $HO—(R''O—)_y—R'''$ où y est un cardinal entre 1 et 15, R'' est un radical hydrocarbure de 2—15 atomes de carbone et R''' est —H ou un radical hydrocarbure de 2—20 atomes de carbone, et

b. du polyglycol.

9. Composition de la revendication 7 où l'agent plastifiant est le dibenzoate de néopentylglycol, la benzophénone ou le polyglycol.

10. Composition de la revendication 9 où le dibenzoate de néopentyl glycol est présent en une quantité d'environ 3% en poids de la composition.

11. Composition selon l'une des revendications 1—10 qui comprend de plus un additif ignifuge en une proportion mineure mais en une quantité au moins suffisante pour rendre la composition incombustible ou auto-extinctrice.

12. Composition selon l'une des revendications 1—11 qui comprend une résine de polytétrafluoroéthylène ou une silice colloïdale fumée en une proportion mineure mais en une quantité au moins suffisante pour rendre la composition non ruisselante lorsqu'elle brûle.

13. Méthode de production d'articles moulés en téréphtalate de polyéthylène renforcé qui comprend;

(1) l'emploi d'une composition de résine de téréphtalate de polyéthylène consistant essentiellement en:

(a) de 40 à 95% en poids de téréphtalate de polyéthylène ayant une viscosité inhérente d'au moins 0,4;

(b) au moins 4% en poids d'un agent de renforcement; d'un matériau de charge; ou un mélange d'un agent de renforcement et d'un matériau de charge; et

(c) de 0,1 à 25% en poids d'un sel de métal alcalin ayant un anion qui est un oxyde d'un élément du Groupe IVA de la Table Périodique; et

(2) le moulage de ladite composition de résine à une température de 70° à 100°C, suffisante pour produire un article moule en téréphtalate de polyéthylène ayant une température de déformation à la chaleur d'au moins 220°C et une valeur de brillance d'au moins 16.

14. Méthode de la revendication 13 où la composition d'une résine est séchée avant d'être mélangée et avant d'être employée dans la méthode.

15. Méthode de la revendication 13 ou 14 où le matériau de renforcement est de la fibre de verre.

16. Méthode selon l'une des revendications 13—15 où le cation du sel d'un métal alcalin est le lithium, le sodium ou le potassium.

17. Méthode de la revendication 16 où le cation du sel d'un métal alcalin est le sodium.

18. Méthode selon l'une des revendications 13—17 où l'anion du sel d'un métal alcalin est un oxyde de carbone ou de silicium.

19. Méthode de la revendication 18 où les anions des sels de métaux alcalins sont le carbonate ou le bicarbonate.

20. Méthode des revendications 17 et 19 où le sel d'un métal alcalin est le bicarbonate de soude ou le carbonate de sodium.

21. Méthode selon l'une des revendications 13—20 où la composition contient de plus de 0,5 à 20% en poids d'un agent plastifiant.

22. Méthode de la revendication 21 où l'agent plastifiant est choisi parmi

(a) des esters d'un acide carboxylique aromatique de 7—11 atomes de carbone contenant au moins un groupe carboxyle par noyau aromatique avec un alcool choisi parmi ceux de formule $(HOCH_2—)_x—R'$ où x

est 1, 2 ou 3 et R′ est un radical hydrocarbure de 2—15 atomes de carbone ou ceux de formule HO—(R″O—)$_y$—R‴ où y est un nombre cardinal entre 1 et 15, R″ est un radical hydrocarbure de 2—15 atomes de carbone et R‴ est —H ou un radical hydrocarbure de 2—20 atomes de carbone, et

(b). du polyglycol.

23. Méthode de la revendication 21 où l'agent plastifiant est le dibenzoate de néopentylglycol, la benzophénone ou un polyglycol.

24. Méthode selon l'une quelconque des revendications 13—23 comprennant, de plus, un additif ignifuge en une proportion mineure mais en une quantité au moins suffisante pour rendre la combustion incombustible ou auto-extinctrice.

25. Méthode de la revendication 24 où ladite combinaison résineuse est non ruisselante lorsqu'elle brûle.